# EUROPEAN PATENT APPLICATION

(11) **EP 2 797 077 A1**
(43) Date of publication of application: **29.10.2014**
(21) Application number: 13188757.2
(22) Date of filing: 15.10.2013
(51) Int. Cl.: G10L 15/22, G10L 21/02, G10L 15/26

(54) **Voice processing apparatus and voice processing method**

(30) Priority: 25.04.2013 KR 20130045896
(71) Applicant: Samsung Electronics Co., Ltd, Gyeonggi-do 443-742 (KR)
(72) Inventor: Kim, Sang-jin, Gyeonggi-do (KR); Yun, Hyun-kyu, Seoul (KR)
(74) Representative: Hewett, Jonathan Michael Richard

(57) **Abstract**

A voice processing apparatus includes: a voice receptor configured to collect a user voice, convert the user voice into a first voice signal, and to output the first voice signal; an audio processor configured to process a sound output through a speaker to output an audio signal; a memory unit configured to store the first voice signal output from the voice receptor and the audio signal output from the audio processor; an echo canceller configured to remove an echo from the first voice signal to generate a second voice signal; and a first controller configured to control the echo canceller to generate the second voice signal based on the first voice signal and the audio signal stored in the memory unit.

## Description

The present invention relates to a voice processing apparatus and a voice processing method. In particular, exemplary embodiments relate to a voice processing apparatus and a voice processing method which are capable of collecting a voice signal of a user and subjecting the voice signal to acoustic echo cancellation from the voice signal to perform a voice recognition function.

Voice recognition is a technique for recognizing voice signals acquired by collecting voice inputs by users as signals corresponding to a specific language, such as a text. In particular, voice recognition technology is simple and convenient, in comparison to a related art input method of pressing a specific button with a finger. Thus, voice recognition is employed for electronic devices, such as a TV and a mobile phone, to replace the input method. For example, a voice instruction "channel up" is input for channel adjustment of a TV, and a voice signal of a user is recognized through a voice recognition engine in the TV. Thus, channel adjustment is conducted. Further, with the advancement of voice recognition technology, a range of voice signals may be extended through voice recognition engines. Although a limited number of given words are recognized in the related art, voice recognition engines enable recognition of comparatively long sentences with improved accuracy. Since complicated processing is involved to recognize long sentences, it is common to transmit a voice signal to a separate server, not to a device, and to receive a voice recognition result performed in the server.

Noise which is included in a voice signal to be processed, other than a user voice, needs to be minimized in order to improve the accuracy of voice recognition results. In a related art configuration, a microphone is installed on a TV or held by a user in order to detect when a user speaks. When the microphone is installed on the TV, a user voice is not accurately collected from the microphone, which may be distant from the user, due to sound wave characteristics. Further, it is inconvenient for the user to speak while holding the microphone. When a plurality of microphones are used to implement beamforming and source separation, a separate device, which includes the microphones, is needed.

Meanwhile, when a TV user speaks while watching a TV, a sound output from a speaker of the TV may be collected, along with the user voice, and transmitted as an acoustic echo to the TV. A process of canceling an acoustic echo is necessary for accurate voice recognition. When a separate voice collecting device, including a plurality of microphones described above is used in the related art, a bandwidth communication problem and audio loss may occur.

An aspect of one or more exemplary embodiments of the present invention may provide a voice processing apparatus and a voice processing method which are capable of overcoming a narrow bandwidth problem in communications and reducing an audio loss rate in an acoustic echo cancelation of voice signals collected by a voice processing apparatus using a plurality of microphones.

According to an aspect of an exemplary embodiment, a voice processing apparatus may include: a voice receptor configured collect a user voice, convert the user voice into a first voice signal, and output the first voice signal; an audio processor configured to process a sound output through a speaker to output an audio signal; a memory unit configured to store the first voice signal output from the voice receptor and the audio signal output from the audio processor; an echo canceller configured to remove an echo from the first voice signal to generate a second voice signal; and a first controller configured to control the echo canceller to generate the second voice signal based on the first voice signal and the audio signal stored in the memory unit.

The voice processing apparatus may include a display device including the audio processor and a voice collecting device configured to communicate with the display device wirelessly and includes the voice receptor, the memory unit, and the echo canceller.

The voice collecting device may include a first communicator configured to receive the audio signal from the display device and transmit the second voice signal, and the display device may include a second communicator configured to transmit the audio signal to the voice collecting device and to receive the second voice signal.

The first controller may be configured to control the first communicator to transmit an input start signal to report a start of collection of the user voice to the display device in response to the collection of the user voice starting through the voice receptor, and the display device may include a second controller configured to control the second communicator to transmit the audio signal to the voice collecting device in response to the input start signal being received through the second communicator.

The first controller may be configured to stop receiving the audio signal and may control the first communicator to transmit the second voice signal to the second communicator in response to reception of the user voice through the voice receptor being completed or after a predetermined period of time since the reception of the user voice starts.

The first communicator and the second communicator may perform wireless communications in accordance with Bluetooth, and the audio signal and the second voice signal may be transmitted and received through one channel.

The first controller may determine that the collection of the user voice starts in response to a user pushing a preset button on a remote controller or the user inputting a preset voice to the voice receptor.

The display device may further include a third communicator configured to communicate with a voice recognition server, and the second controller may be configured to transmit the second voice signal to the voice recognition server and receive a voice recognition result of the second voice signal from the voice recognition server through the third communicator.

The voice receptor may include at least two microphones to collect the user voice and a codec to encode a voice signal received from each of the at least two microphones to generate the first voice signal.

The voice processing apparatus may further include a voice processor configured to receive the second voice signal generated by the echo canceller and perform voice processing including beamforming and source separation.

According to another aspect of an exemplary embodiment, a voice processing method of a voice processing apparatus including a display device and a voice collecting device, the voice processing method including: collecting a user voice by the voice collecting device and converting the user voice into a first voice signal; transmitting an audio signal output through a speaker from the display device to the voice collecting device; storing the first voice signal and the audio signal in a memory of the voice collecting device; generating a second voice signal by removing an echo from the first voice signal based on the first voice signal and the audio signal stored in the memory; and transmitting the second voice signal from the voice collecting device to the display device.

The display device and the voice collecting device may be separated from each other and communicate with each other wirelessly.

The voice processing method may further include transmitting an input start signal to report a start of collection of the user voice from the voice collecting device to the display device in response to the collection of the user voice starting, wherein the transmitting of the audio signal may be carried out in response to the input start signal being transmitted to the display device.

The voice processing method may include stopping receiving the audio signal and transmitting the second voice signal from the voice collecting device to the display device in response to reception of the user voice being completed or after a predetermined period of time since the reception of the user voice starts.

The voice collecting device and the display device may perform wireless communications in accordance with Bluetooth, and the transmitting of the audio signal and the transmitting of the second voice signal respectively transmit the audio signal and the second voice signal through one channel.

The voice collecting device may determine that the collection of the user voice starts in response to a user pushing a preset button on a remote controller or the user inputting a preset voice through a microphone.

The voice processing method may further include transmitting the second voice signal from the display device to a voice recognition server; and receiving a voice recognition result of the second voice signal from the voice recognition server.

The voice collecting device may include at least two microphones to collect the user voice and a codec to encode a voice signal received from each of the at least two microphones to generate the first voice signal.

The voice processing method may further include receiving the second voice signal and performing voice processing including beamforming and source separation.

According to another aspect of an exemplary embodiment, a voice processing method using a display device and a voice collection device includes: determining whether collection of a user voice begins; transmitting an input start signal to the display device in response to the determining that the collection of the user voice has begun; transmitting an audio signal from the display device to a voice collecting device based on the input start signal; stopping transmission of the audio signal in response to completing collection of the user voice or a predetermined time being passed from a start of collection of the user voice; and transmitting a voice signal from the voice collecting device to the display device.

As described above, a voice processing apparatus and a voice processing method according to exemplary embodiments are capable of overcoming a narrow bandwidth problem in communications and reducing an audio loss rate in an acoustic echo cancelation of voice signals collected by a voice processing apparatus using a plurality of microphones.

The above and/or other aspects will become apparent and more readily appreciated from the following description of the exemplary embodiments, taken in conjunction with the accompanying drawings, in which:
FIG. 1 schematically illustrates a voice processing apparatus according to an exemplary embodiment.
FIG. 2 is a block diagram illustrating the voice processing apparatus according to an exemplary embodiment.
FIG. 3 illustrates a signal processing flow of the voice processing apparatus according to an exemplary embodiment.
FIGS. 4 and 5 are flowcharts illustrating voice processing methods according to exemplary embodiments.

Below, exemplary embodiments will be described in detail with reference to accompanying drawings so as to be realized by a person having ordinary skill in the art. The exemplary embodiments may be embodied in various forms without being limited to the exemplary embodiments set forth herein. Descriptions of well-known parts are omitted for clarity and conciseness, and like reference numerals refer to like elements throughout.

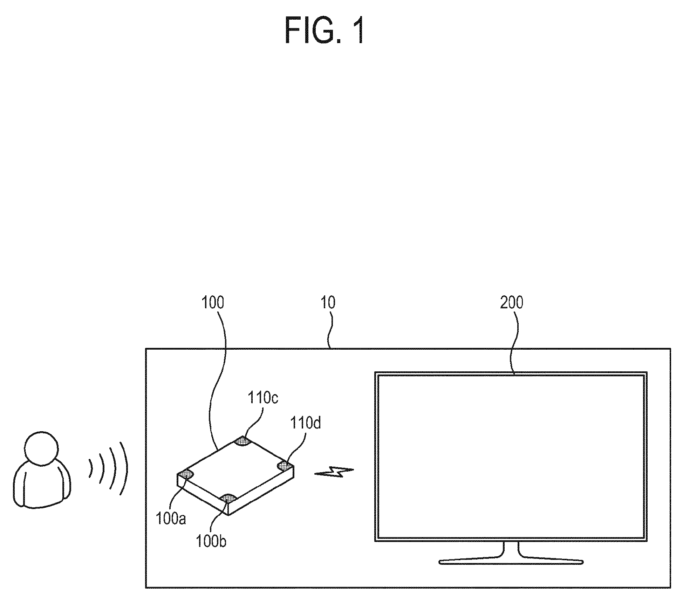

FIG. 1 schematically illustrates a voice processing apparatus 10 according to an exemplary embodiment.

As shown in FIG. 1, the voice processing apparatus 10 may include a voice collecting device 100 and a display device 200. The voice collecting device 100 includes a plurality of array microphones 110a to 110d to receive or "collect" the voice of a user. The display device 200 may be configured as a digital television (DTV) to receive and output image and voice signals from a source.

In the present embodiment, the voice collecting device 100 and the display device 200 may be physically separated from each other. In this case, the voice collecting device 100 and the display device 200 may transmit and receive voice and audio signals through communications via a wireless local area network, such as Bluetooth. The user may dispose the voice collecting device 100 closer to the user than the display device 200. Accordingly, when the user utters speech or a voice pattern for voice recognition, a microphone collecting the voice includes less noise than the microphone disposed near or on the display device 200. Thus, a more accurate result of voice recognition may be obtained.

The voice collecting device 100 and the display device 200 may be configured in various forms.

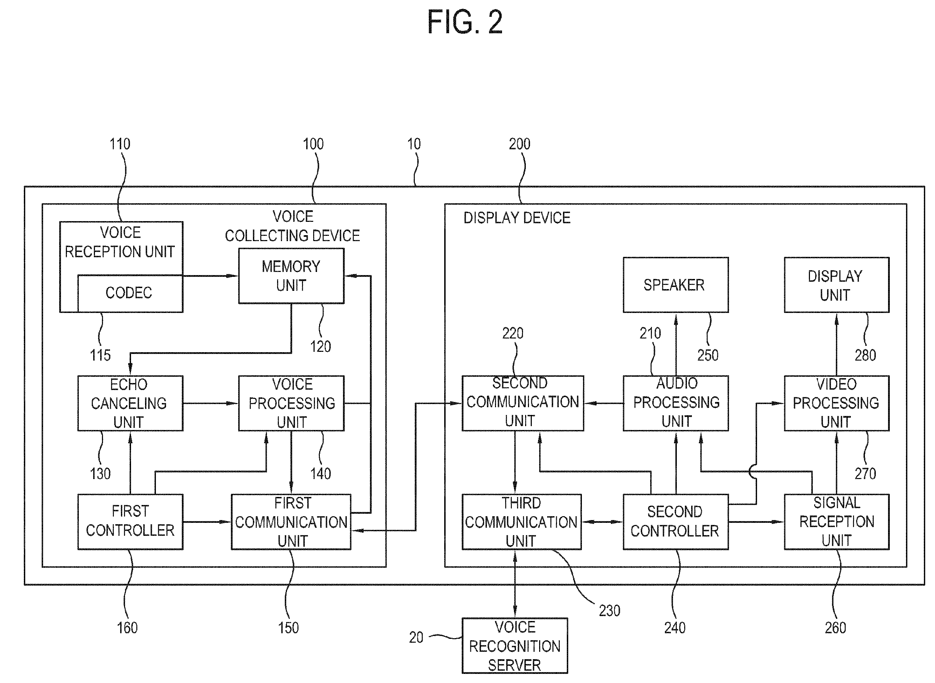

FIG. 2 is a block diagram illustrating the voice processing apparatus 10 according to an exemplary embodiment.

As shown in FIG. 2, the voice processing apparatus 10 may include a voice reception unit 110, a memory unit 120, an echo canceling unit 130, a voice processing unit 140, a first communication unit 150, a first controller 160, an audio processing unit 210, a second communication unit 220, a third communication unit 230, a second controller 240, a speaker 250, a signal reception unit 260, a video processing unit 270, and a display unit 280. Here, all of these components are not essential constituents, but some of them may constitute the voice processing apparatus 10, depending on an exemplary embodiment.

The voice processing apparatus 10 may include the voice collecting device 100 which includes the voice reception unit 110, the memory unit 120, the echo canceling unit 130, the voice processing unit 140, the first communication unit 150, and the first controller 160, and the display device 200 which includes the audio processing unit 210, the second communication unit 220, the third communication unit 230, the second controller 240, the speaker 250, the signal reception unit 260, the video processing unit 270, and the display unit 280. The voice collecting device 100 may be physically separated from the display device 200. Hereinafter, a configuration of the voice collecting device 100 and a configuration of the display device 200 will be described in detail.

The voice reception unit 110 collects a voice of the user and converts the voice into a first voice signal. The voice reception unit 110 may include a plurality of microphones, e.g., four microphones 110a to 110d as shown in FIG. 1, each of which may be disposed at an upper lateral side of the voice collecting device 100. In the present embodiment, the voice processing apparatus 10 includes a plurality of array microphones to perform beamforming and source separation functions. Thus, voice recognition performance is enhanced. The voice reception unit 110 may include a codec 115 to convert the first voice signal, collected by each of the microphones, into digital data to be processed in the first controller 160. The first voice signal, converted by the codec 115, is output to the memory unit 120 according to control of the first controller 160. The first voice signal input to each microphone may be processed separately by the codec unit 115 and output to the memory unit 120.

The memory unit 120 stores the first voice signal output from the voice reception unit 110 and an audio signal output from the audio processing unit 210. The first voice signal and the audio signal stored in the memory unit 120 may be output to the echo canceling unit 130 according to control of the first controller 160. The memory unit 120 may be configured as a known buffer memory that temporarily stores the first voice signal and the audio signal, without being limited to a particular kind.

The echo canceling unit 130 removes an echo from the first voice signal stored in the memory unit 120 to generate a second voice signal. The speaker 250 of the display device 200 outputs a sound, which generates an echo in a space. Thus, the first voice signal collected by the voice reception unit 110 may include a generated echo. Therefore, a sound output needs to be removed through the speaker 250 from the first voice signal so as to recognize an accurate voice. The speaker 250 of the display device 200 outputs a sound based on an audio signal output from the audio processing unit 210. Thus, the echo canceling unit 130 removes an echo of the first voice signal by removing an audio signal component from the first voice signal. The echo canceling unit 130 may be configured as a separate hardware chip or an application program implemented by the controller. Various algorithms are generally known to remove an acoustic echo.

As described above, the first voice signal may include a plurality of voice signals collected by the plurality of microphones and converted by the codec 115. The codec 115 may be stored in the memory unit 120 and used to generate second voice signals. For example, when the voice reception unit 110 includes four microphones as shown in FIG. 1, four second voice signals may be generated.

The first controller 160 may be configured as a microprocessor responsible for generic control of the voice collecting device 100, such as a central processing unit (CPU) and a micro control unit (MCU). The first controller 160 controls the echo canceling unit 130 to generate the second voice signal based on the first voice signal and the audio signal stored in the memory unit 120.

The voice collecting device 100 may further include the voice processing unit 140 to receive the second voice signal generated by the echo canceling unit 130 and to perform voice processing including beamforming and source separation. Beamforming is a technique used to select a direction of a source of a voice signal using a plurality of microphones and to extract the voice signal output in the selected direction. For example, when a plurality of users utter voices, beamforming may be used to extract a voice signal of one target user for voice recognition. Source separation is a technique used to extract a desired signal by removing noise from received signals via digital processing. For example, when a plurality of users utter voices, the voices of all users are collected by the microphones. Thus, source separation may be used to extract a voice of only one user from the voice signals. As described above, the first voice signal received from each of the plurality of microphones is output as the second voice signal to the voice processing unit 140 via conversion by the codec 115 and echo cancelation by the echo canceling unit 130. The voice processing unit 140 may extract a second voice signal of a user for voice recognition from a plurality of second voice signals through beamforming, and remove a different voice signal component from the extracted second voice signal through source separation.

The first communication unit 150 conducts data transmission and reception with the second communication unit 220 of the display device 200. When a voice signal of a user is input to the voice reception unit 110 for voice recognition, a second voice signal via echo cancelation and voice processing may be transmitted to the second communication unit 220 through the first communication unit 150. Further, the first communication unit 150 may receive an audio signal from the second communication unit 220. The first communication unit 150 may be configured as a Bluetooth module, and also may use any known wireless local area network, such as Zigbee, Wi-Fi, and Wimax.

Hereinafter, the configuration of the display device 200 will be described in detail.

The signal reception unit 260 may receive video and audio signals from various supply sources (not shown). The signal reception unit 260 may receive a radio frequency (RF) signal transmitted from a broadcasting station wirelessly or receive image signals in accordance with composite video, component video, super video, SCART and high definition multimedia interface (HDMI) standards via a cable. Alternatively, the signal reception unit 260 may connect to a web server (not shown) to receive a data packet of web content. The video signals and the audio signals received by the signal reception unit 260 are output to the video processing unit 270 and the audio processing unit 210, respectively.

The audio processing unit 210 performs general audio processing, such as analog-to-digital (A/D) conversion, decoding and noise elimination, on the audio signal output from the signal reception unit 260 and outputs the audio signal to the speaker 250. Also, the audio signal may be transmitted to the first communication unit 150 via the second communication unit 220 for echo cancelation.

The speaker 250 outputs a sound based on the audio signal processed by the audio processing unit 210. The speaker 250 may be mounted on the display device 200 or connected via a cable/wirelessly thereto.

The video processing unit 270 performs various preset video processing processes on a video signal transmitted from the signal reception unit 260. The video processing unit 270 may include various configurations to perform decoding in accordance with different video formats, de-interlacing, frame refresh rate conversion, scaling, noise reduction to improve image quality and detail enhancement. The video processing unit 270 may be provided as a separate component to independently perform each process, or as an integrated multi-functional component, such as a system on chip (SOC).

The display unit 280 displays an image based on the video signal output from the video processing unit 270. The display unit 280 may be configured in various display modes using liquid crystals, plasma, light emitting diodes and organic light emitting diodes. However, various display modes are not limited thereto.

The second controller 240 may be configured as a microprocessor responsible for generic control of the display device 200, such as a CPU and an MCU. When an input start signal to report a start of collection of user voices is received through the first communication unit 150, the second controller 240 may control to transmit the audio signal to the first communication unit 150 of the voice collecting device 100.

The second communication unit 220 conducts data transmission and reception with the first communication unit 150 of the voice collecting device 100. When a voice signal of a user is input to the voice reception unit 110 for voice recognition, a second voice signal via echo cancelation and voice processing may be transmitted to the second communication unit 220 through the second communication unit 220. Further, the first communication unit 150 may receive an audio signal from the first communication unit 150. Like the first communication unit 150, the second communication unit 220 may be configured as a Bluetooth module and also use any known wireless local area network, such as Zigbee, Wi-Fi and Wimax. The second communication unit 220 may transmit and receive various signals, e.g., 3D synchronization signals and user input signals from a separate device, such as a pair of 3D glasses and a remote control unit, in addition to the second voice signal and the audio signal.

The third communication unit 230 may transmit the second voice signal to an external voice recognition server 20, and receive a recognition result of the second voice signal processed in the voice recognition server 20. Voice recognition technology is used to recognize a voice signal acquired by collecting voices input by users, etc., as a signal corresponding to a specific language, such as a text. The voice recognition server 20 receives the second voice signal and transmits a voice recognition result from conversion of the second voice signal into language data according to a predetermined algorithm to the third communication unit 230. The third communication unit 230 may conduct data transmission and reception with the voice recognition server 20 through a network.

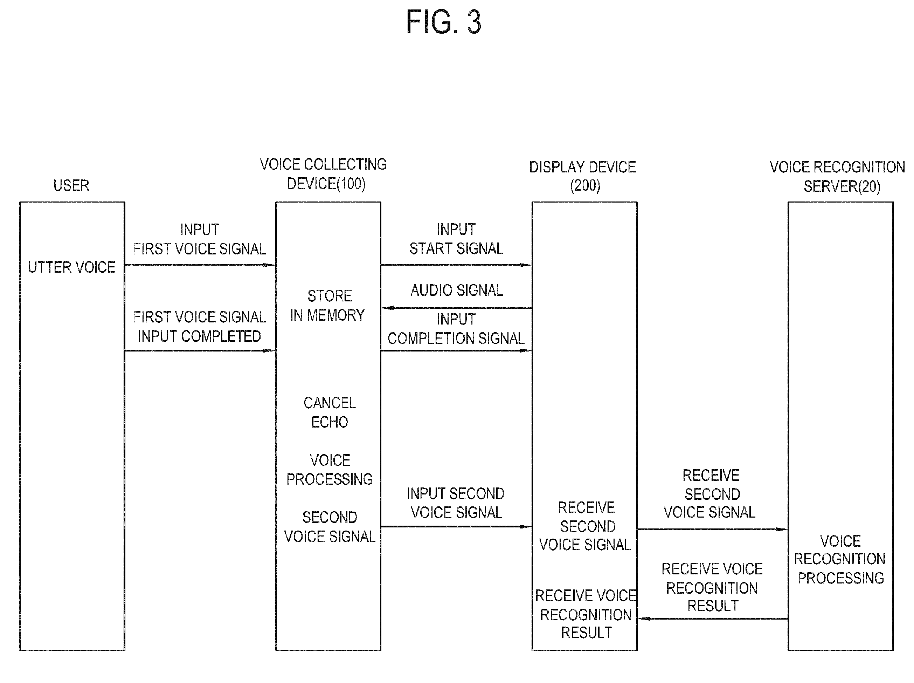

Hereinafter, a process that the voice processing apparatus 10 performs voice signal processing according to an exemplary embodiment will be described in detail with reference to FIG. 3. As described above, the voice processing apparatus 10 may include the voice collecting device 100 and the display device 200.

When a user utters a voice to perform a voice recognition function, the voice reception unit 110 of the voice collecting device 100 collects the voice to generate a first voice signal and stores the first voice signal in the memory unit 120. As described above, the voice reception unit 110 may include the plurality of microphones, each of which may collect and store each of the first voice signals in the memory unit 120.

When collection of user voices through the voice reception unit 110 starts, the first controller 160 of the voice collecting device 100 controls the first communication unit 150 to transmit an input start signal to report the start of collection to the second communication unit 220 of the display device 200. Starting the collection of user voices for the voice recognition function may include at least one of the user pushing a preset button to perform the voice recognition function through a remote controller, the user uttering a preset voice, or determining that a volume of a voice collected by the voice reception unit 110 is a preset level or higher.

While the voice reception unit 110 collects the user voices and generates the first voice signals, the second controller 240 of the display device 200 simultaneously controls the second communication unit 220 to transmit an audio signal currently being output through the speaker 250 to the first communication unit 150. In other words, the first voice signal and the audio signal stored in the memory unit 120 are stored in synchronization with each other over time and data for a predetermined period of time may be stored.

When the reception of user voices through the voice reception unit 110 is completed or after a predetermined period of time since the reception of user voices starts, the first controller 160 controls the first communication unit 150 to transmit an input completion signal to the second communication unit 220 so as to stop transmission of audio signals. In other words, when voice signals of the user are collected for a predetermined time, audio signals are received and stored in the memory unit, and collection of voice signals are completed, reception of audio signals is stopped. Accordingly, transmission of audio signals from the display device 200 to the voice collecting device 100 and transmission of second voice signals from the voice collecting device 100 to the display device 200 are carried out at different times. Therefore, the audio signals and the second voice signals are transmitted using only one transmission channel.

The echo canceling unit 130 removes an echo from the first voice signal based on the first voice signal and the audio signal stored in the memory unit 120 to generate the second voice signal. The echo canceling unit 130 may perform an echo cancelation process after reception of user voices are completed and reception of audio signals is stopped. As the voice reception unit 110 may collect components of sounds output through the speaker 250 based on audio signals, the second voice signal may be generated by removing an audio signal component from the first voice signal through a known algorithm.

The second voice signal output from the echo canceling unit 130 is subjected to voice processing, such as beamforming and source separation, by the voice processing unit 140. Accordingly, only a voice of a target user for voice recognition may be extracted from a plurality of second voice signals generated by removing an echo from the first voice signals collected by the microphones, while voice components of other users may be removed.

The voice processing apparatus 10 according to the present embodiment is configured to receive the first voice signals from the respective microphones through the voice reception unit 110, and to subject the plurality of second voice signals, generated by performing echo cancellation on the first voice signals, to voice processing such as beamforming and source separation. Such a configuration may realize more excellent voice recognition performance than when echo cancelation is performed on a single voice signal obtained via beamforming and source separation of the first voice signal.

The second voice signal processed by the audio processing unit 210 is transmitted to the second communication unit 220 of the display device 200 through the first communication unit 150, and the display device 200 may transmit the received second voice signal to the voice recognition server 20.

The voice recognition server 20 converts the second voice signal into language data via voice recognition processing and outputs the language data to the display device 200. The display device 200 may perform an operation, for example, channel adjustment, display setting and implementation of an application, based on the received language data.

In the voice processing apparatus 10 according to the present embodiment, the first communication unit 150 and the second communication unit 220 may conduct data transmission and reception via Bluetooth, and also may need to communicate with a pair of 3D glasses and a remote control unit through Bluetooth when a general display device 200 is used. In the Bluetooth standard, a plurality of transmission channels are used within a narrow range of bandwidth. When the display apparatus 200 is connected to a different device in addition to the voice collecting device 100, minimum channels may be required. A method of compressing second voice signals for transmission may also be considered, which may involve a possibility of not acquiring an accurate voice recognition result due to data loss. Thus, as described above, the voice processing apparatus 10 according to the present embodiment separates times for transmission of second voice signals via echo cancelation and audio processing and for transmission of audio signals. Therefore, only one transmission channel is utilized.

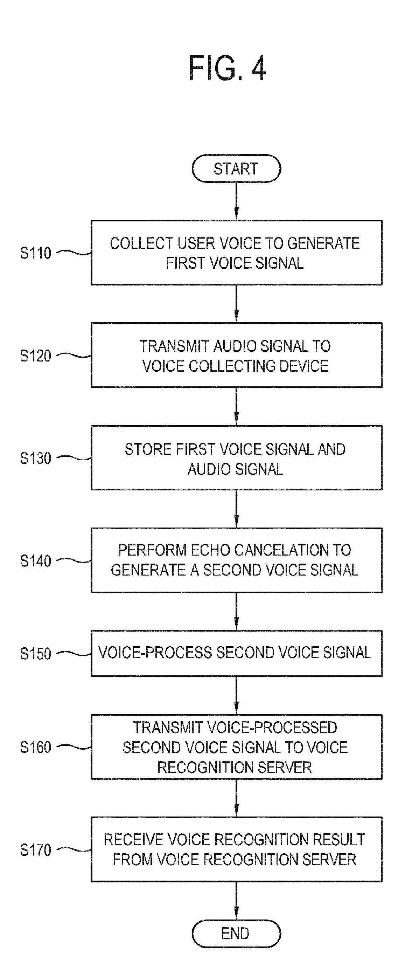

FIG. 4 is a flowchart illustrating a voice processing method according to an exemplary embodiment.

A voice processing apparatus according to the present embodiment may include a voice collecting device and a display device which are physically separated from each other. The voice collecting device may be configured as an apparatus that includes a plurality of array microphones to collect user voices, and the display device may be configured as a DTV that receives and outputs image and audio signals from an image source.

The voice collecting device collects a user voice to generate a first voice signal (S110). The voice collecting device may include the plurality of array microphones and generate a plurality of first voice signals received from the respective microphones.

The display device transmits an audio signal to the voice collecting device (S120). Transmission of the audio signal may be performed simultaneously with generation of the first voice signal.

The voice collecting device stores the first voice signal and the audio signal in a memory (S130).

The voice collecting device removes an echo from the first voice signal and the audio signal stored in the memory (S140). An echo may be removed from the first voice signal by removing a component of the audio signal from the first voice signal.

The voice collecting device may perform voice processing including beamforming and source separation on a second voice signal obtained via echo cancelation (S150). Accordingly, one second voice signal may be extracted by extracting only a voice of a target user for voice recognition from a plurality of second voice signals generated by removing the first voice signals collected by the microphones and removing voice components of other users.

The voice collecting device transmits the voice-processed second voice signal to the display device (S160).

The display device transmits the second voice signal to a voice recognition server (S170) and receives a voice recognition result from the voice recognition server to perform a predetermined operation.

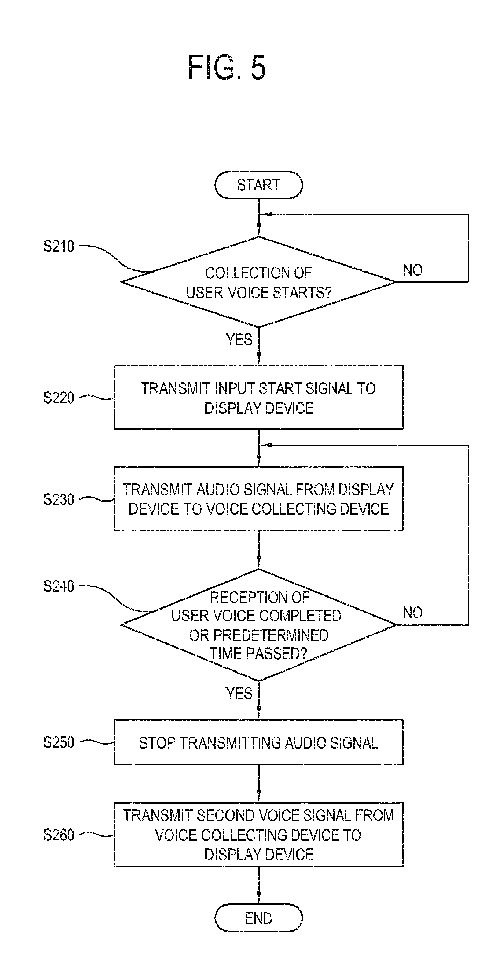

FIG. 5 is a flowchart illustrating a voice processing method according to an exemplary embodiment.

The voice collecting device determines whether collection of a user voice starts (S210). Starting the collection of the user voice for the voice recognition function may include at least one of the user pushing a preset button to perform the voice recognition function through a remote controller, the user uttering a preset voice, or determining that a volume of a voice collected by the voice reception unit 110 is a preset level or higher.

When it is determined that the collection of the user voice starts, the voice collecting device transmits an input start signal to report the start of collection to the display device (S220).

The display device receiving the input start signal transmits an audio signal to the voice collecting device (S230).

When the reception of the user voice is completed or after a predetermined period of time since the reception of the user voice starts (S240), the voice collecting device transmits an input completion signal to the display device so as to stop transmission of the audio signal, and accordingly the display device stops the transmission of the audio signal (S250).

The voice collecting device transmits a second voice signal generated via echo cancelation and voice processing to the display device (S260).

Another exemplary embodiment may disclose that any of the voice reception unit 110, the echo canceling unit 130, the voice processing unit 140, the first communication unit 150, the audio processing unit 210, the second communication unit 220, the third communication unit 230, the speaker 250, the signal reception unit 260, the video processing unit 270, and the display unit 280 may include at least one of a processor, a hardware module, or a circuit for performing their respective functions.

Although a few exemplary embodiments have been shown and described, it will be appreciated by those skilled in the art that changes may be made in these exemplary embodiments without departing from the invention, the scope of which is defined in the appended claims.

## Claims

1. A voice processing apparatus comprising:
a voice reception unit to receive a user voice, to convert the user voice into a first voice signal, and to output the first voice signal;
an audio processing unit to process a sound output through a speaker to output an audio signal;
a memory unit to store the first voice signal output from the voice reception unit and the audio signal output from the audio processing unit;
an echo canceling unit to remove an echo from the first voice signal to generate a second voice signal; and
a first controller to control the echo canceling unit to generate the second voice signal based on the first voice signal and the audio signal stored in the memory unit.

2. The voice processing apparatus of claim 1, wherein the voice processing apparatus comprises a display device comprising the audio processing unit and a voice collecting device communicating with the display device wirelessly and comprising the voice reception unit, the memory unit and the echo canceling unit.

3. The voice processing apparatus of claim 2, wherein the voice collecting device comprises a first communication unit to receive the audio signal from the display device and to transmit the second voice signal, and the display device comprises a second communication unit to transmit the audio signal to the voice collecting device and to receive the second voice signal.

4. The voice processing apparatus of claim 3, wherein the first controller controls the first communication unit to transmit an input start signal to report a start of collection of the user voice to the display device when the collection of the user voice starts through the voice reception unit, and the display device comprises a second controller to control the second communication unit to transmit the audio signal to the voice collecting device when the input start signal is received through the second communication unit.

5. The voice processing apparatus of claim 4, wherein the first controller stops receiving the audio signal and controls the first communication unit to transmit the second voice signal to the second communication unit when reception of the user voice through the voice reception unit is completed or after a predetermined period of time since the reception of the user voice starts.

6. The voice processing apparatus of claim 5, wherein the first communication unit and the second communication unit perform wireless communications in accordance with Bluetooth, and the audio signal and the second voice signal are transmitted and received through one channel.

7. The voice processing apparatus of claim 4, wherein the first controller determines that the collection of the user voice starts when a user pushes a preset button on a remote controller or inputs a preset voice to the voice reception unit.

8. The voice processing apparatus of claim 2, wherein the display device further comprises a third communication unit to communicate with a voice recognition server, and the second controller transmits the second voice signal to the voice recognition server and receives a voice recognition result of the second voice signal from the voice recognition server through the third communication unit.

9. The voice processing apparatus of any one of the preceding claims, wherein the voice reception unit comprises at least two microphones to collect the user voice and a codec to encode a voice signal received from each of the at least two microphones and to generate the first voice signal.

10. The voice processing apparatus of any one of the preceding claims, further comprising a voice processing unit to receive the second voice signal generated by the echo canceling unit and to perform voice processing comprising beamforming and source separation.

11. A voice processing method of a voice processing apparatus comprising a display device and a voice collecting device, the voice processing method comprising:
collecting a user voice by the voice collecting device and converting the user voice into a first voice signal;
transmitting an audio signal output through a speaker from the display device to the voice collecting device;
storing the first voice signal and the audio signal in a memory of the voice collecting device;
generating a second voice signal by removing an echo from the first voice signal based on the first voice signal and the audio signal stored in the memory; and
transmitting the second voice signal from the voice collecting device to the display device.

12. The voice processing method of claim 11, wherein the display device and the voice collecting device are separated from each other and communicate with each other wirelessly.

13. The voice processing method of claim 11 or claim 12, further comprising transmitting the second voice signal from the display device to a voice recognition server; and receiving a voice recognition result of the second voice signal from the voice recognition server.

14. The voice processing method of any one of claims 11 to 13, wherein the voice collecting device comprises at least two microphones to collect the user voice and a codec to encode a voice signal received from each of the at least two microphones and to generate the first voice signal.

15. The voice processing method of any one of claims 11 to 14, further comprising receiving the second voice signal and performing voice processing comprising beamforming and source separation.
